# EUROPÄISCHE PATENTANMELDUNG

(11) **EP 3 093 100 A1**
(43) Veröffentlichungstag der Anmeldung: **16.11.2016**
(21) Anmeldenummer: 16167186.2
(22) Anmeldetag: 27.04.2016
(51) Int. Cl.: B23P 15/00, B23C 3/18

(54) **HERSTELLEN VON SCHAUFELKANÄLEN VON TURBOMASCHINENROTOREN**

(30) Priorität: 12.05.2015 DE 102015208784
(71) Anmelder: MTU Aero Engines AG, 80995 München (DE)
(72) Erfinder: Steinert, Wolfgang, 85235 Odelzhausen-Taxa (DE); Seidl, Adolf, 85305 Jetzendorf (DE)

(57) **Zusammenfassung**

Die vorliegende Erfindung betrifft ein Verfahren zum Herstellen von Schaufelkanälen von Turbomaschinenrotoren, insbesondere Gasturbinenrotoren, mit integrierten Schaufeln, mit den Schritten:
- Erzeugen einer Mehrzahl von in Umfangsrichtung gegeneinander versetzten Anordnungen (10, 20, 30, 40) von Bohrungen (11-41) von einer radial äußeren Mantelfläche des Rotors her, wobei wenigstens zwei Bohrungen (11-15; 21-25; 31-35) wenigstens einer Anordnung in Axial- und/oder Umfangsrichtung derart gegeneinander versetzt sind, dass diese Bohrungen ineinandergreifen und einen Schlitz bilden; und
- Erzeugen von Druck- und Saugseiten (2, 3) von Schaufeln durch Materialabtragen in den Schlitzen.

## Beschreibung

Die vorliegende Erfindung betrifft ein Verfahren und eine Werkzeugmaschine zum Herstellen von Schaufelkanälen von Turbomaschinenrotoren, insbesondere Gasturbinenrotoren, mit integrierten Schaufeln sowie einen dadurch hergestellten Turbomaschinenrotor, insbesondere Gasturbinenrotor.

Insbesondere in Gasturbinen werden Rotoren mit integrierten Schaufeln verwendet, sogenannte BLISKs ("BLade Integrated DISKs", auch "integrally bladed rotor" IBR).

Nach betriebsinterner Praxis werden Schaufelkanäle solcher BLISKs durch computergesteuerte Zerspanungsmaschinen hergestellt, insbesondere durch Fräsen, vorzugsweise Taumelfräsen ("trochoid milling"), oder versetzte Bohrungen in Durchströmungs- bzw. Längsrichtung der Schaufelkanäle.

Eine Aufgabe einer Ausführung der vorliegenden Erfindung ist es, Turbomaschinenrotoren, insbesondere Gasturbinenrotoren, mit integrierten Schaufeln zur Verfügung zu stellen, die durch Schaufelkanäle definiert bzw. voneinander getrennt sind.

Diese Aufgabe wird durch ein Verfahren mit den Merkmalen des Anspruchs 1 gelöst. Ansprüche 15, 16 stellen einen Turbomaschinenrotor, insbesondere Gasturbinenrotor, mit Schaufelkanälen, die durch ein hier beschriebenes Verfahren hergestellt sind, bzw. eine, insbesondere computergesteuerte, Werkzeugmaschine zum Durchführen eines hier beschriebenen Verfahrens unter Schutz. Vorteilhafte Ausführungsformen der Erfindung sind Gegenstand der Unteransprüche.

Nach einem Aspekt der vorliegenden Erfindung umfasst ein Verfahren zum Herstellen von mehreren in Umfangsrichtung gegeneinander versetzten Schaufelkanälen eines Turbomaschinenrotors, insbesondere Gasturbinenrotors, mit integrierten Schaufeln, insbesondere einer sogenannten BLISK, den Schritt: Erzeugen bzw. Herstellen einer Mehrzahl von in Umfangsrichtung des Rotors gegeneinander versetzten Bohrungsanordnungen, insbesondere von wenigstens zwei, insbesondere wenigstens drei, in Umfangsrichtung des Rotors gegeneinander versetzten Bohrungsanordnungen, von einer radial äußeren Mantelfläche des Rotors her bzw. aus, wobei eine oder mehrere, insbesondere alle, (Bohrungs)Anordnungen der Mehrzahl jeweils wenigstens zwei, insbesondere wenigstens drei, Bohrungen aufweisen, die, insbesondere deren Mittelpunkte bzw. -achsen, jeweils, insbesondere paarweise, in Axial- und/oder Umfangsrichtung des Rotors, insbesondere in Axial- und/oder Umfangsrichtung wenigstens im Wesentlichen äquidistant, derart gegeneinander versetzt sind, dass wenigstens zwei, insbesondere wenigstens drei, insbesondere alle, Bohrungen der jeweiligen Anordnung ineinandergreifen bzw. einander teilweise in Axial- und/oder Umfangsrichtung überlappen bzw. -lagern und so jeweils einen Schlitz bilden. Mit anderen Worten werden in diesem Schritt zwei oder mehr in Umfangsrichtung des Rotors gegeneinander versetzte Schlitze durch je zwei oder mehr ineinandergreifende bzw. einander teilweise überlappende bzw. -lagernde Bohrungen erzeugt bzw. hergestellt, die von einer radial äußeren Mantelfläche des Rotors her bzw. aus erzeugt werden.

Hierdurch können in einer Ausführung vorteilhaft Eigenspannungen, die insbesondere durch vorhergehendes Ur- und/oder Umformen wie beispielsweise Schmieden und/oder, insbesondere spanabhebendes, Bearbeiten wie beispielsweise Schrupp(dreh- oder fräs)en, zwischen in Umfangsrichtung gegeneinander versetzten und durch die Schlitze voneinander wenigstens teilweise getrennten Schaufelrohlingen eingeprägt wurden, reduziert werden. Zusätzlich oder alternativ kann durch die Bohrungen Material zwischen in Umfangsrichtung gegeneinander versetzten Schaufelrohlingen vorteilhaft, insbesondere schnell, einfach, prozesssicher und/oder kostengünstig, entfernt werden.

In einer Ausführung werden anschließend Druck- und Saugseiten von Schaufeln, insbesondere fertigen bzw. fertigbearbeiteten Schaufeln oder Schaufelrohlingen bzw. -halbzeugen, deren Druck- und/oder Saugseiten in einer Weiterbildung anschließend weiter bearbeitet, insbesondere end- bzw. fertigbearbeitet, werden, durch Materialabtragen in den Schlitzen, insbesondere durch Materialabtragen von durch die ineinandergreifenden Bohrungen erzeugten Stegen, erzeugt bzw. hergestellt.

Diese Stege können in einer Ausführung vorteilhaft die durch die Schlitze voneinander wenigstens teilweise getrennten Schaufeln während der materialabtragenden Erzeugung ihrer Druck- und/oder Saugseiten abstützen bzw. versteifen.

In einer Ausführung werden zunächst alle Bohrungsanordnungen bzw. Schlitze und erst daran anschließend die Druck- und Saugseiten der Schaufeln, insbesondere Schaufelrohlinge, erzeugt. Hierdurch können insbesondere vorteilhaft die Eigenspannungen reduziert werden.

In einer anderen Ausführung werden (bereits) Druck- und Saugseiten von Schaufeln durch Materialabtragen in bereits erzeugten Schlitzen erzeugt, bevor und/oder während (noch) weitere Bohrungsanordnungen bzw. Schlitze erzeugt werden. Dabei werden in einer Weiterbildung alternierend ein oder mehrere Schlitze und daran jeweils anschließend Druck- und Saugseiten erzeugt. In einer anderen Weiterbildung werden Druck- und Saugseiten in bereits erzeugten Schlitzen und weitere Schlitze gleichzeitig bzw. parallel erzeugt. Hierdurch kann insbesondere vorteilhaft eine Produktionszeit reduziert werden.

In einer Ausführung bleibt der Rotor während der Erzeugung der Bohrungen und Druck- und Saugseiten in einer hierzu eingerichteten Werkzeugmaschine befestigt, insbesondere (ein- bzw. auf)gespannt. Hierdurch kann insbesondere vorteilhaft eine Produktionszeit reduziert werden.

In einer Ausführung beträgt eine radiale Höhe einer oder mehrerer, insbesondere aller, erzeugten Bohrungen wenigstens 75%, insbesondere wenigstens 90%, insbesondere wenigstens im Wesentlichen 100%, einer, insbesondere minimalen, maximalen, und/oder mittleren, Schaufelhöhe einer benachbarten Druck- und/oder Saugseite der Schaufeln. Mit anderen Worten reichen in einer Ausführung eine oder mehrere, insbesondere alle, Bohrungen von einer Schaufelspitze bis zu einem Schaufel- bzw. Schaufelkanalgrund.

In einer Ausführung differiert ein Abstand einer oder mehrerer, insbesondere aller, Bohrungen, insbesondere ein Abstand ihres bzw. ihrer Mittelpunkte(s) bzw. -achse(n), in Umfangsrichtung des Rotors von einer benachbarten Druckseite und einer benachbarten Saugseite um höchstens 10%, insbesondere höchstens 5% des, insbesondere minimalen, maximalen, und/oder mittleren, Abstandes zwischen der benachbarten Druck- und Saugseite in Umfangsrichtung. Mit anderen Worten sind diese Bohrungen, wenigstens im Wesentlichen, äquidistant zu den benachbarten Druck- und Saugseiten angeordnet. Hierdurch kann vorteilhaft ein maximaler Bohrungsradius genutzt werden.

In einer Ausführung beträgt ein Durchmesser einer oder mehrerer, insbesondere aller, der Bohrungen wenigstens 30%, insbesondere wenigstens 50%, insbesondere wenigstens 75%, eines minimalen Abstandes in Umfangsrichtung zwischen einer benachbarten Druck- und Saugseite. Hierdurch kann vorteilhaft ein maximaler Bohrungsradius genutzt werden. Zusätzlich oder alternativ beträgt in einer Ausführung der Durchmesser höchstens 90%, insbesondere höchstens 85%, insbesondere höchstens 75%, des minimalen Abstandes. Hierdurch kann vorteilhaft Material bzw. Aufmaß zum Abtragen vorgehalten werden.

In einer Ausführung weisen zwei oder mehr, insbesondere alle, Bohrungen einer oder mehrerer, insbesondere aller, Anordnungen denselben Durchmesser auf. Hierdurch kann vorteilhaft dasselbe Bohrwerkzeug verwendet werden. Zusätzlich oder alternativ weisen in einer Ausführung zwei oder mehr, insbesondere alle, Bohrungen einer oder mehrerer, insbesondere aller, Anordnungen unterschiedliche Durchmesser auf. Hierdurch können die Bohrungen vorteilhaft individuell, insbesondere an Schaufelkanäle mit variierender Kanalbreite, angepasst werden.

In einer Ausführung überdecken Querschnitte von zwei oder mehr, insbesondere allen, Bohrungen in einer oder mehreren, insbesondere allen, Anordnungen einander paarweise um wenigstens 10%, insbesondere wenigstens 25%. Zusätzlich oder alternativ überdecken die Querschnitte von zwei oder mehr, insbesondere allen, Bohrungen in einer oder mehreren, insbesondere allen, Anordnungen einander paarweise um höchstens 90%, insbesondere höchstens 50%. Hierdurch können insbesondere ein vorteilhafter Materialabtrag realisiert, ein Verlaufen bzw. Abweichen eines Bohrwerkzeugs vermieden und/oder vorteilhafte Stege erzeugt werden.

In einer Ausführung ist eine Bohrachse eines Bohrwerkzeugs beim Erzeugen einer oder mehrerer, insbesondere aller Bohrungen gegen eine Radialrichtung des Rotors um höchstens 35°, insbesondere um höchstens 15°, geneigt und/oder beim Erzeugen der jeweiligen Bohrung, wenigstens im Wesentlichen, konstant bzw. rotorfest. Mit anderen Worten sind eine oder mehrere, insbesondere alle, Bohrungen, in einer Ausführung wenigstens im Wesentlichen radiale Bohrungen, die von radial außen nach radial innen erzeugt werden.

In einer Ausführung werden eine oder mehrere, insbesondere alle, Bohrungen jeweils in einem einzigen Arbeitsgang bzw. Zug von der radial äußeren Mantelfläche des Rotors bis zum Bohrungs-, insbesondere Schaufelkanalgrund, erzeugt, insbesondere durch Bohren von radial außen nach radial innen, insbesondere, wenigstens im Wesentlichen, bis zum Schaufel(kanal)grund. Zwei oder mehr Bohrungen einer Anordnung und/oder Bohrungen von zwei oder mehr Anordnungen können dabei in einer Ausführung gleichzeitig bzw. parallel oder auch nacheinander erzeugt werden.

In einer Ausführung wird eine zuerst erzeugte Bohrung einer oder mehrerer, insbesondere aller, Anordnungen in axialer Richtung von einander gegenüberliegenden Stirnseiten des Rotors, insbesondere wenigstens im Wesentlichen gleich, beabstandet erzeugt. Mit anderen Worten wird eine erste Bohrung wenigstens einer der Anordnungen in Axialrichtung des Rotors, insbesondere wenigstens im Wesentlichen mittig, zwischen dessen Stirnseiten angesetzt. In einer anderen Ausführung wird eine zuerst erzeugte Bohrung einer oder mehrerer, insbesondere aller, Anordnungen in axialer Richtung an einer der Stirnseiten des Rotors erzeugt.

In einer Ausführung sind ein oder mehrere, insbesondere alle, durch die ineinandergreifenden Bohrungen gebildete Schlitze in Axiahichtung des Rotors zu, insbesondere nur, einer oder zu beiden einander gegenüberliegenden Stirnseiten des Rotors hin offen. Hierdurch kann vorteilhaft Material entfernt werden. In einer anderen Ausführung sind ein oder mehrere, insbesondere alle, durch die ineinandergreifenden Bohrungen gebildete Schlitze in Axiahichtung des Rotors zu beiden einander gegenüberliegenden Stirnseiten des Rotors hin geschlossen. Hierdurch kann in einer Ausführung der anschließende Materialabtrag in dem Schlitz verbessert werden, insbesondere ein umlaufendes Materialabtragen.

In einer Ausführung werden zunächst wenigstens zwei in Umfangsrichtung benachbarte Schlitze durch die ineinandergreifenden Bohrungen vollständig (aus)gebildet bzw. erzeugt und (erst) anschließend die Druck- und Saugseite einer Schaufel durch Materialabtragen in diesen Schlitzen erzeugt.

In einer Ausführung werden die Druck- und/oder Saugseite einer oder mehrerer, insbesondere aller, Schaufeln durch berührungsloses, insbesondere elektrochemisches oder funkenerosives, und/oder spanabhebendes Materialabtragen, insbesondere mit geometrisch bestimmter und/oder unbestimmter Schneide, insbesondere durch Schruppen, insbesondere Schruppfräsen, und/oder Schlichten, insbesondere Schlichtfräsen, in den Schlitzen erzeugt.

In einer Ausführung werden die Druck- und/oder Saugseite einer oder mehrerer, insbesondere aller, Schaufeln, insbesondere fertiger Schaufeln oder Schaufelrohlinge, durch mehrmaliges bzw. mehrlagiges Materialabtragen in den Schlitzen erzeugt, in einer Weiterbildung durch Vor- und Fertigschruppen und/oder -schlichten.

Zusätzlich oder alternativ kann das Materialabtragen radial blockweises bzw. mehrstufig erfolgen, wobei in einer Ausführung zunächst Material auf wenigstens 25% einer radialen Länge der Bohrungen und anschließend in einer weiteren, radial nach innen zugestellten, Stufe auf wenigstens weiteren 25% der radialen Länge abgetragen wird.

In einer Ausführung wird Material zunächst in einem radial äußeren Block mehrlagig abgetragen, beispielsweise durch Vorschlicht(fräs)en und anschließendes Schlicht(fräs)en, bevor anschließend Material in einem weiteren, radial inneren Block mehrlagig abgetragen wird, beispielsweise nach radialem Zustellen des bzw. der Fräser. Gleichermaßen kann zunächst Material einlagig nacheinander in mehreren radialen Blöcken abgetragen werden, beispielsweise durch Vorschlicht(fräs)en in verschiedenen radialen Höhen, und anschließend eine weitere Materialschicht nacheinander ebenfalls in mehreren radialen Blöcken, beispielsweise durch radiales Zustellen eines Schlichtfräsers.

In einer Ausführung werden die Druck- und Saugseite einer oder mehrerer, insbesondere aller, Schaufeln, insbesondere auf ihrer gesamten radialen Höhe oder auf einem Teil hiervon, durch umlaufendes Materialabtragen erzeugt, insbesondere durch Materialabtragen entlang der Druck- und Saugseite und entlang einer bzw. über eine diese verbindende(n) Vorder- und/oder Hinterkante hinweg. Entsprechend wird in einer Ausführung auch eine ihre Druck- und Saugseite verbindende Vorder- und/oder Hinterkante einer oder mehrerer, insbesondere aller, Schaufeln, insbesondere auf ihrer gesamten radialen Höhe oder auf einem Teil hiervon, durch das Materialabtragen erzeugt, insbesondere durch umlaufendes Materialabtragen zusammen mit dem Erzeugen der Druck- und Saugseite durch Materialabtragen in den Schlitzen. Mit anderen Worten kann ein umlaufendes Materialabtragen zum Erzeugen der Druck- und Saugseite einer oder mehrerer, insbesondere aller, Schaufeln jeweils Materialabtragen in den beiden der Druck- und Saugseite benachbarten Schlitzen und einen oder zwei einander axial gegenüberliegende materialabtragende Übergänge zwischen diesen beiden Schlitzen umfassen.

Eine, insbesondere computergesteuerte, Werkzeugmaschine zum Herstellen eines Turbomaschinenrotors durch ein hier beschriebenes Verfahren, weist ein ein- oder mehrteiliges Bohrwerkzeug zum Erzeugen der Mehrzahl von in Umfangsrichtung gegeneinander versetzten Anordnungen von Bohrungen und ein ein- oder mehrteiliges Werkzeug zum Erzeugen der Druck- und Saugseiten der Schaufeln durch Materialabtragen in den durch die Bohrungen gebildeten Schlitzen auf. Wie vorstehend ausgeführt, weist in einer Weiterbildung die Werkzeugmaschine ein Spannmittel auf, an dem der Rotor sowohl während des Erzeugens der Bohrungen als auch der Druckund Saugseiten lösbar befestigt ist bzw. wird, insbesondere ohne Lösen zwischen dem Erzeugen der Bohrungen und dem Erzeugen der Druck- und Saugseiten.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Draufsicht in radialer Richtung auf einen Teil eines Gasturbinenrotors während eines Schrittes eines Verfahrens zum Herstellen von Schaufelkanälen nach einer Ausführung der vorliegenden Erfindung;
- Fig. 2: eine Fig. 1 entsprechende Draufsicht während eines anschließenden Schrittes des Verfahrens; und
- Fig. 3: eine Ansicht in Axialrichtung auf den Teil der Fig. 2.

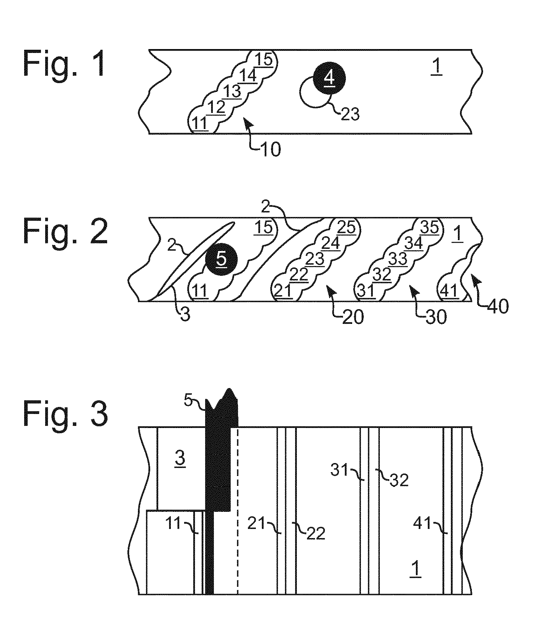

Fig. 1 zeigt eine Draufsicht in radialer Richtung von radial außen auf einen Teil eines Gasturbinenrotors 1 mit integrierten Schaufeln während eines Schrittes eines Verfahrens zum Herstellen von Schaufelkanälen nach einer Ausführung der vorliegenden Erfindung.

In dem in Fig. 1 gezeigten Schritt wird, wie insbesondere die Zusammenschau mit dem in Fig. 2 dargestellten späteren Zustand verdeutlicht, eine Mehrzahl von in Umfangsrichtung (horizontal in Fig. 1, 2) gegeneinander versetzten Anordnungen 10, 20, 30 bzw. 40 von Bohrungen 11-41 mittels eines Bohrwerkzeugs 4 einer Werkzeugmaschine nach einer Ausführung der vorliegenden Erfindung erzeugt, wobei die Bohrungen 11-15 der Anordnung 10, die Bohrungen 21-25 der Anordnung 20, die Bohrungen 31-35 der Anordnung 30 und die die Bohrungen der Anordnung 40 jeweils in Axiahichtung (vertikal in Fig. 1, 2) und Umfangsrichtung derart gegeneinander versetzt sind, dass die Bohrungen einer Anordnung jeweils ineinandergreifen und einen Schlitz bilden. In dem in Fig. 1 dargestellten Zustand sind die Bohrungen 11-15 der Anordnung 10 bereits erzeugt und bilden einen Schlitz. Von der Anordnung 20 ist die erste Bohrung 23 ebenfalls bereits erzeugt, wobei nun das Bohrwerkzeug die Bohrung 24 (vgl. Fig. 2) erzeugt.

In dem in Fig. 2 gezeigten Schritt werden Saugseiten 2 und Druckseiten 3 von Schaufeln durch Materialabtragen in diesen Schlitzen 10, 20, 30 bzw. 40 erzeugt.

Hierzu werden zunächst durch einen Vorschlichtfräser 5 insbesondere die Stege, die durch die Bohrungen erzeugt wurden, in einer radial äußeren Hälfte bzw. einem radial äußeren Block (oben in Fig. 3) entfernt. Anschließend wird an der Saugseite und Druckseite in diesem radial äußeren Block durch einen Schlichtfräser (nicht dargestellt) eine weitere Materiallage abgetragen.

Anschließend werden durch den Vorschlichtfräser 5 insbesondere die Stege, die durch die Bohrungen erzeugt wurden, in einer radial inneren Hälfte bzw. einem radial inneren Block (unten in Fig. 3) entfernt. Anschließend wird an der Saugseite und Druckseite in diesem radial inneren Block durch den Schlichtfräser eine weitere Materiallage abgetragen.

Fig. 2, 3 zeigen hierzu exemplarisch einen Zustand, in dem der Vorschlichtfräser 5 Material in der radial inneren Hälfte von der Druckseite 3 abträgt.

Im Ausführungsbeispiel erzeugt das Bohrwerkzeug 4 von einer radial äußeren Mantelfläche her Bohrungen 11-41, die bzw. von einer Schaufelspitze aus (oben in Fig. 3) bis zu einem Schaufel(kanal)grund (unten in Fig. 3) reichen, so dass ihre radiale Höhe etwa 100% einer Schaufelhöhe der benachbarten Druck- und Saugseiten 2, 3 beträgt.

Wie insbesondere in Fig. 2 erkennbar, liegen die Bohrungen in Umfangsrichtung (horizontal in Fig. 2) etwa in der Mitte zwischen benachbarten Druck- und Saugseiten 2, 3.

Die Bohrachse (senkrecht auf der Zeichenebene der Fig. 2) des Bohrwerkzeugs 4 ist beim Erzeugen der Bohrungen 11-41 jeweils im Wesentlichen parallel zu einer Radialrichtung des Rotors (vertikal in Fig. 3) bzw. gegen diese um etwa 0° geneigt.

Wie in Fig. 1 erkennbar, ist eine zuerst erzeugte Bohrung 23 der Anordnungen 20 in axialer Richtung von einander gegenüberliegenden Stirnseiten des Rotors etwa gleich beabstandet.

Wie in Fig. 2 erkennbar, sind die durch die ineinandergreifenden Bohrungen gebildeten Schlitze in Axialrichtung zu beiden einander gegenüberliegenden Stirnseiten des Rotors hin offen.

Der Materialabtrag, insbesondere der Materialabtrag durch den Vorschlichtfräser 5 und/oder der Materialabtrag durch den Schlichtfräser, kann in einer Ausführung umlaufend erfolgen, wobei der jeweilige Fräser zunächst in einem einer Schaufel 2 benachbarten Schlitz Material abträgt und aus diesem Schlitz, insbesondere unter Materialabtrag an einer Vorder- oder Hinterkante der Schaufel, in den diesem gegenüberliegenden, anderen der Schaufel benachbarten Schlitz übergeht, im Ausführungsbeispiels also zum Beispiel aus dem durch die Anordnung 20 gebildeten Schlitz unten oder oben in Fig. 2 in den durch die Anordnung 10 gebildeten Schlitz und aus diesem gegebenenfalls oben oder unten in Fig. 2 zurück in den durch die Anordnung 20 gebildeten Schlitz oder umgekehrt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Gasturbinenrotor
- 2: Saugseite
- 3: Druckseite
- 4: Bohrwergzeug
- 5: Fräser
- 10, 20, 30, 40: (Bohrungs)Anordnung/Schlitz
- 11-41: Bohrung

## Patentansprüche

1. Verfahren zum Herstellen von Schaufelkanälen von Turbomaschinenrotoren, insbesondere Gasturbinenrotoren (1), mit integrierten Schaufeln, mit den Schritten:
Erzeugen einer Mehrzahl von in Umfangsrichtung gegeneinander versetzten Anordnungen (10, 20, 30, 40) von Bohrungen (11-41) von einer radial äußeren Mantelfläche des Rotors her, wobei wenigstens zwei Bohrungen (11-15; 21-25; 31-35) wenigstens einer Anordnung in Axial- und/oder Umfangsrichtung derart gegeneinander versetzt sind, dass diese Bohrungen ineinandergreifen und einen Schlitz bilden; und
Erzeugen von Druck- und Saugseiten (2, 3) von Schaufeln durch Materialabtragen in den Schlitzen.

2. Verfahren nach dem vorhergehenden Anspruch, **dadurch gekennzeichnet, dass** eine radiale Höhe wenigstens einer der erzeugten Bohrungen wenigstens 75%, insbesondere wenigstens 90%, einer Schaufelhöhe einer benachbarten Druck- und/oder Saugseite der Schaufeln beträgt.

3. Verfahren nach einem der vorhergehenden Ansprüche, **dadurch gekennzeichnet, dass** ein Abstand wenigstens einer der Bohrungen in Umfangsrichtung von einer benachbarten Druckseite und einer benachbarten Saugseite um höchstens 10% differiert.

4. Verfahren nach einem der vorhergehenden Ansprüche, **dadurch gekennzeichnet, dass** ein Durchmesser wenigstens einer der Bohrungen wenigstens 30%, insbesondere wenigstens 50%, und/oder höchstens 90%, insbesondere höchstens 85%, eines minimalen Abstandes in Umfangsrichtung zwischen einer benachbarten Druck- und Saugseite beträgt.

5. Verfahren nach einem der vorhergehenden Ansprüche, **dadurch gekennzeichnet, dass** wenigstens zwei Bohrungen wenigstens einer der Anordnungen denselben oder unterschiedliche Durchmesser aufweisen.

6. Verfahren nach einem der vorhergehenden Ansprüche, **dadurch gekennzeichnet, dass** Querschnitte von wenigstens zwei benachbarten Bohrungen wenigstens einer der Anordnungen einander um wenigstens 10% und/oder höchstens 90% überdecken.

7. Verfahren nach einem der vorhergehenden Ansprüche, **dadurch gekennzeichnet, dass** eine Bohrachse eines Bohrwerkzeugs beim Erzeugen wenigstens einer der Bohrungen gegen eine Radialrichtung des Rotors um höchstens 35°, insbesondere höchstens 15°, geneigt ist.

8. Verfahren nach einem der vorhergehenden Ansprüche, **dadurch gekennzeichnet, dass** wenigstens eine der Bohrungen in einem einzigen Arbeitsgang erzeugt wird.

9. Verfahren nach einem der vorhergehenden Ansprüche, **dadurch gekennzeichnet, dass** eine zuerst erzeugte Bohrung wenigstens einer der Anordnungen in axialer Richtung von einander gegenüberliegenden Stirnseiten des Rotors, insbesondere wenigstens im Wesentlichen gleich, beabstandet erzeugt wird.

10. Verfahren nach einem der vorhergehenden Ansprüche, **dadurch gekennzeichnet, dass** wenigstens einer der durch die ineinandergreifenden Bohrungen gebildeten Schlitze in Axialrichtung zu einer oder beiden einander gegenüberliegenden Stirnseiten des Rotors hin offen ist.

11. Verfahren nach einem der vorhergehenden Ansprüche, **dadurch gekennzeichnet, dass** zunächst wenigstens zwei in Umfangsrichtung benachbarte Schlitze durch die ineinandergreifenden Bohrungen gebildet und anschließend die Druckund Saugseite einer Schaufel durch Materialabtragen in diesen Schlitzen erzeugt werden.

12. Verfahren nach einem der vorhergehenden Ansprüche, **dadurch gekennzeichnet, dass** die Druck- und/oder Saugseite wenigstens einer der Schaufeln durch mehrmaliges und/oder radial blockweises Materialabtragen in den Schlitzen erzeugt werden.

13. Verfahren nach einem der vorhergehenden Ansprüche, **dadurch gekennzeichnet, dass** die Druck- und/oder Saugseite wenigstens einer der Schaufeln durch spanabhebendes und/oder berührungsloses Materialabtragen, insbesondere Schruppen und/oder Schlichten, in den Schlitzen erzeugt werden.

14. Verfahren nach einem der vorhergehenden Ansprüche, **dadurch gekennzeichnet, dass** die Druck- und Saugseite wenigstens einer der Schaufeln durch umlaufendes Materialabtragen erzeugt werden.

15. Turbomaschinenrotor, insbesondere Gasturbinenrotor, mit integrierten Schaufeln, der durch ein Verfahren nach einem der vorhergehenden Ansprüche hergestellt ist.

16. Werkzeugmaschine zum Herstellen eines Turbomaschinenrotors nach dem vorhergehenden Anspruch durch ein Verfahren nach einem der vorhergehenden Ansprüche, mit einem Bohrwerkzeug zum Erzeugen der Mehrzahl von in Umfangsrichtung gegeneinander versetzten Anordnungen von Bohrungen und einem Werkzeug zum Erzeugen der Druck- und Saugseiten der Schaufeln durch Materialabtragen in den durch die Bohrungen gebildeten Schlitzen.
